# EUROPEAN PATENT APPLICATION

(11) **EP 0 621 155 A1**
(43) Date of publication of application: **26.10.1994**
(21) Application number: 94200992.9
(22) Date of filing: 12.04.1994
(51) Int. Cl.: B60K 28/16, B60T 8/00, G01P 3/60

(54) **Road grip detection method and vehicle having a road grip detector**

(30) Priority: 22.04.1993 NL 9300689
(71) Applicant: Selectiebedrijf Kooi Beheer B.V., NL-9077 ZV Vrouwenparochie (NL)
(72) Inventor: Kooi, Eeuwe Durk, NL-9079 LC St. Jacobiparochie (NL)
(74) Representative: 't Jong, Bastiaan Jacobus

(57) **Abstract**

The invention relates to a method for indicating to a driver of a vehicle (1) the grip of the travelling vehicle on a road surface. The method comprises determining the revolutions of a driven wheel (7), determining the revolutions of a free-running wheel (8) and generating and providing to the driver a signal corresponding with the difference between these revolutions. The invention further relates to a vehicle (1) comprising a chassis and a number of wheels (7,8) mounted on the chassis. At least one of the wheels is driven by a drive device (3) supported by the chassis and at least one wheel is a free-running wheel. Revolution sensors (13,15) are coupled to the driven wheel (7) and the free-running wheel (8) and coupled to the revolution sensors (13,15) and an output device (18) is a processing device which defines a revolution difference value and activates the output device in accordance with this value.

## Description

The invention relates to a method for indicating to a driver of a vehicle the grip of the travelling vehicle on a road surface.

For safe use of a vehicle it is desirable that the driver adapts his driving style and driving speed to the conditions. An important factor herein is the grip of the vehicle on the road surface. When this grip decreases the driver must make allowance for a longer braking distance and it would in general be advisable to maintain a lower speed. A driver receives a limited amount of information concerning the grip of his vehicle on the road surface via the steering wheel. When grip is reduced the steering forces will in general be smaller.

In order to be able to utilize this information well the driver must know the vehicle very well and in particular know what the normal steering forces are in order to be able to recognize differing, lesser steering forces. Moreover, when driving in a straight line such information is not, or practically not, available.

The invention therefore has for its object to provide a method with which the driver receives a useful indication of the grip of the vehicle.

With the method according to the invention this is achieved in that the revolutions of a driven wheel are determined, the revolutions of a free-running wheel are determined and a signal corresponding to the difference between these revolutions is provided to the driver.

When grip of the vehicle on the road surface is reduced the driven wheel will display greater slip than the free-running wheel. The signal corresponding to the difference between these revolutions is thus an indication for the grip of the vehicle on the road surface. When in otherwise unchanged conditions, for example when driving in a straight line at constant speed, the value of the signal increases, the driver receives the indication that the grip of his vehicle on the road surface is decreasing and he can adapt his speed and driving style. The signal thus gives an indication of for example less skid resistance of the road surface and/or a greater unevenness, whereby a less good wheel-road surface contact results.

The signal will of course vary with, among other things, the power transmitted by the driven wheel onto the road surface. The driver will however rapidly develop sufficient experience to be able to interpret the signal and in particular to be able to determine whether the indicated value of the signal is normal, favourable or precisely unfavourable.

According to a further development the step of claim 2 can be performed. The influence of the drive torque exerted on the driven wheel is hereby greatly reduced. The slip of a driven wheel varies linearly within determined limits with the drive torque. By correcting the difference signal for this relation, a signal is obtained which is simpler to interpret.

A further development of the invention is characterized in claim 3. The slip of the driven wheel is within certain limits inversely dependent on the load. By also correcting for this influence, the obtained signal is even easier to interpret by the driver.

In the case of an uneven road surface, such as for example a brick-paved road, the slip of the driven wheel varies with high frequency. This makes reading the signal more difficult. The step of claim 4 is therefore preferably applied. The attenuation can take place by filtering out the signal components with a frequency lying above a determined value. Another possibility is to integrate the signal with a determined time constant.

The invention likewise relates to and provides a vehicle as characterized in claim 5. Further favourable embodiments of the vehicle according to the invention are characterized in the further sub-claims.

The invention will be elucidated in the following description with reference to the annexed figure, which shows a vehicle schematically.

The vehicle 1 comprises a driven rear shaft 2. The driving takes place by means of a combustion engine 3 which is coupled via a gearbox 4 and a drive shaft 5 to a differential 6 arranged in the rear shaft 2. The wheel 7 of the rear shaft 2 is thus a driven wheel.

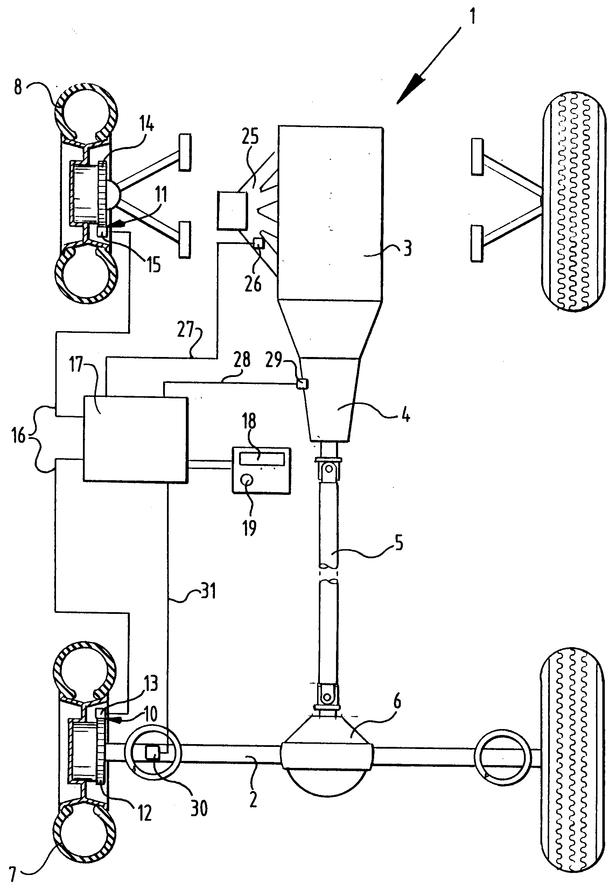

The front wheels of the vehicle are free-running. In the figure one of the front wheels is designated with the reference numeral 8.

The driven wheel 7 comprises a rotation sensor 10 which in this embodiment consists of a toothed disc 12 rotating with the wheel, and a detector 13 disposed close to the periphery thereof and stationary relative to the rear shaft 2. The toothed disc 12 can be for example a metal toothed disc and the detector can herein operate inductively. With rotation of the driven wheel 7 the rotation sensor 10 therefore generates a pulsating signal the frequency of which is proportional to the rotation speed of the wheel 7.

The free-running wheel 8 is provided in corresponding manner with a rotation sensor 11, which here also comprises a toothed disc 14 and a detector 15 arranged at the periphery thereof.

Instead of the rotation sensors indicated schematically here and consisting of a toothed disc with for instance an inductive detector, other suitable rotation sensors can also be applied.

The signals from the detectors 13 and 15 are supplied via signal lines 16 to a processing device 17. In this processing device a signal is formed from the signals of the detectors 13 and 15 that is representative of the difference in the rotation speed of the driven wheel 7 and the free-running wheel 8. This signal can be fed directly to the output device 18. In the most simple form the difference signal is displayed immediately in the output device 18 because the output device 18 is embodied as an analog or digital meter.

The output device 18 can be provided with an adjusting member 19 with which a threshold value can be set. When the difference signal exceeds the set value, the output device 18 can be activated, for example to give an audible signal.

In the case of vehicle 1 still more signals are supplied to the processing device 17. In the first place a pressure sensor 26 is connected to the inlet manifold 25 of motor 3, which sensor generates a signal proportional to the underpressure in the inlet manifold 25. The power generated by motor 3 depends, in accordance with a function to be defined, on the underpressure in the inlet manifold 25. The signal from the pressure sensor 26 thus gives an indication of the power generated by the motor 3.

The gearbox 4 is further provided with a gear position detector 29. The signals from the pressure sensor 26 and the gear position detector 29 are fed via signals 27 respectively 28 to the processing device 17 and with this data is determined what power is being supplied by motor 3 via the gearbox 4 to the drive shaft 5 and thus to the driven wheel 7. The difference signal for the rotation speeds of the driven and non-driven wheels is corrected with this data.

In order to perform this correction the relation between the drive torque on the driven wheel 7 and the slip thereof can be measured beforehand. This relation can then be stored in the processing device 17 in order to correct the signal with this relation in otherwise self-evident manner.

Another possibility is for the processing device 17 to be given a self-learning form. In this case the device will be provided with a suitable control means which can set the processing device 17 in the self-learning mode. The driver can switch into this mode when driving on a part of the road with constant properties. By pressing in and releasing the accelerator pedal a number of times in this mode the processing device 17 can determine the relation of the pressure sensor signal 26, the signal from the gear position detector 29 and the difference in revolutions. The zero position, that is, the situation in which no slip occurs, can be entered into the processing device 17 by switching the drive into the neutral position and again operating a suitable control means arranged for this purpose. In the neutral position of the drive the normally driven wheel is also a free-running wheel and will undergo no slip of any significance. The relation between the signals from the detectors 13 and 15 thus represent in that case the situation wherein the slip is equal to zero.

The vertical load on the wheel 7 also has an influence on the slip. When the load is greater the slip will be smaller. In order to also correct for this influence a load detector 30 is arranged which detects the load with which the spring, designated in this case as a coil spring, supports on the shaft 2. The signal from the load detector 30 is supplied via a line 31 to the processing device 17 in which the revolutions difference signal from the wheels 7 and 8 is corrected with this load signal. The characteristic according to which the correction is performed can also be predetermined, but it is also possible to allow this characteristic to be determined by a self-learning capability of the processing device itself.

Setting the device to zero can, in addition to the manner already indicated above, also take place automatically. Each time the drive is changed to the neutral position and no power is thus transmitted to the driven wheel 7, a zero setting can take place. The above mentioned control means can in that case therefore be replaced by a switch which is activated in the neutral position of the drive.

In a further self-evident manner the processing device 17 can also be embodied as a digital processing device based on a microprocessor. This can be combined in suitable manner with a control device of an anti-blocking system or an automatic traction control of the vehicle, or in any case make use of the wheel rotation sensors thereof.

## Claims

1. Method for indicating to a driver of a vehicle the grip of the travelling vehicle on a road surface, comprising determining the revolutions of a driven wheel, determining the revolutions of a free-running wheel and generating and providing to the driver a signal corresponding with the difference between these revolutions.

2. Method as claimed in claim 1, further comprising determining the drive torque exerted on the driven wheel and processing the signal therewith in accordance with a predetermined function of the reciprocal of the determined drive torque.

3. Method as claimed in claim 1 or 2, further comprising determining the vertical load of the driven wheel and processing the signal therewith in accordance with a predetermined function of the vertical load.

4. Method as claimed in any of the foregoing claims, wherein signal components with a frequency lying above a determined value are attenuated.

5. Vehicle comprising a chassis, a number of wheels mounted on the chassis, at least one of which is driven by a drive device supported by the chassis and at least one of which is a free-running wheel, revolution sensors coupled to the driven wheel and the free-running wheel and a processing device which is coupled to the revolution sensors and an output device and which defines a revolutions difference value and activates the output device in accordance with this value.

6. Vehicle as claimed in claim 5, further comprising a sensor for the drive torque exerted on the driven wheel, which sensor is coupled to the processing device.

7. Vehicle as claimed in claim 5 or 6, comprising a sensor for the vertical load of the wheel, which sensor is coupled to the processing device.

8. Vehicle as claimed in any of the claims 5-7, wherein the processing device comprises a filter device.

9. Vehicle as claimed in any of the claims 5-8, wherein the revolution sensors coupled to the wheels form part of an anti-blocking system (ABS) or an anti-slip system.
